(19)

Europäisches
Patentamt
European
Patent Office
Office européen
des brevets

(11)   **EP 2 778 515 A1**

(12)   # EUROPEAN PATENT APPLICATION

(43) Date of publication:
**17.09.2014 Bulletin 2014/38**

(21) Application number: **14153393.5**

(22) Date of filing: **31.01.2014**

(51) Int Cl.:
*F21V 5/00* (2006.01)     *F21V 5/04* (2006.01)
*G02B 19/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.03.2013 CN 201310084953**

(71) Applicant: **OSRAM GmbH**
**80807 München (DE)**

(72) Inventors:
• **Yuan, Weilai**
  **Shenzhen Guangdong 518053 (CN)**
• **Ming, Yusheng**
  **Shenzhen Guangdong 518053 (CN)**
• **Lin, Aimin**
  **Shenzhen Guangdong 518053 (CN)**
• **Zhang, HongWei**
  **Shenzhen Guangdong 518053 (CN)**

(54)   **Lens and lighting device**

(57)   The present invention relates to a lens (1) for a light source (10), comprising a base (2) and a body (3) extending from the base (2), characterized in that, an optical microstructure is provided on the bottom of the base facing away the body to form an incident face (21), and a light (L) from the light source (10) enters into the incident face (21) and emitted from the body (3). In addition, the present invention also relates to a lighting device comprising the lens.

**Figure 1**

EP 2 778 515 A1

**Description**

**Technical Field**

The present invention relates to a lens and a lighting device.

**Background Art**

With the development of the LED lighting technology, more LED lighting devices are used as light sources in various environments. The luminance of a real light spot formed by light from an LED chip is not uniform due to a manufacturing tolerance of the LED chip. Sometimes, the illuminance is not uniform and the color is not uniform, either. In order to solve the above problems and obtain a lighting effect as good as possible, a lens is usually needed to be installed over the LED chip to adjust light from the LED chip.

In the prior art, the incident face of a lens defines a space which accommodates an LED chip, especially an LED chip mounted at a circuit board by way of a COB technology. Thus, it can be ensured that the light from a light source can enter the lens as much as possible and then is emitted out uniformly. However, there exists a problem that, different models of LED chips need to be used in different situations, thus dedicated lenses should be arranged to ensure continuously keeping fine lighting effect. To achieve lighting needs, the incident face of this conventional lens needs to meet a predetermined area and depth, which will lead to a too large thickness of the lenses in the prior art and then to a too large self weight. In addition, this lens has poor generality and cannot be used in combination with different models of light sources widely.

**Summary of the Invention**

To solve the above problems, the present invention provides a new lens which comprises advantages of high generality and small thickness and self weight.

A lens according to the present invention comprises a base and a body extending from the base, characterized in that, an optical micro-structure is provided on the bottom of the base facing away the body to form an incident face, and a light from the light source enters into incident face and emitted from the body. The lens according to the present invention can only use the optical micro-structure towards the light source side, i.e., at the bottom, to receive an incident light. Thus, fine optical effect can also be achieved, especially when the structural height of the lens is limited.

In a preferable design solution according to the present invention, the base is a flat panel extending in a first plane. On the basis that the incident face of the lens has an optical micro-structure, the base can be advantageously designed in a flat panel shape, thus the thickness of the lens can be reduced under the precondition of ensuring the optical properties of the lens unchanged. Based on this advantage, this kind of lens can be used on various occasions, especially in a lighting device which structural space is limited.

In a preferable design solution according to the present invention, the optical micro-structure is formed on the whole bottom. In this situation, the optical micro-structure can receive the incident light from the light source to the most extent to avoid unnecessary light loss.

In a preferable design solution according to the present invention, a predetermined is kept distance between the incident face and the light source. By adjusting the distance between the incident face and the light source, the size and the shape of the light spot obtained through the lens can be changed flexibly.

In a preferable design solution according to the present invention, the area of the incident face is larger than that of the light source. The incident face can cover the light source completely, thus can be applied to light sources with various structural sizes, thereby greatly improving the generality of the lens.

In a preferable design solution according to the present invention, the optical micro-structure is formed by a plurality of grooves. The sidewalls of the respective grooves are used to receive the incident light from the light source and further refract the incident light towards a light exiting face.

In a preferable design solution according to the present invention, the plurality of grooves are a plurality of long grooves extending in parallel to each other which form a first microstructure array. The grooves forming the optical micro-structure can have the same depth.

In a preferable design solution according to the present invention, the plurality of grooves are respectively designed as a V-shape groove. Thus the area of the incident face can be increased to ensure that the light from the light source can be emitted out through the lens as efficiently and uniformly as possible.

In a preferable design solution according to the present invention, the first microstructure array has a continuous sawtooth-shape contour, a continuous wave-shape contour, or a continuous trapezium-shape contour in a second plane perpendicular to the first plane. Within the scope of the present invention, the optical axis of the lens is within the second plane. In the situation that the lens has a rotational symmetric design, the second plane is the middle section of the lens.

In a preferable design solution according to the present invention, the grooves adjacent to each other form a conical body unit, wherein, the sidewalls of the respective grooves form the conical face of the conical body unit, and a plurality of the conical body units form a second microstructure array. The second microstructure array, for example, can be constructed by two groups of grooves arranged in parallel to each other, and the two groups of grooves intersect each other at a predetermined angle, for example, 90 degrees, and jointly define a plurality of conical body unit uniformly arranged.

In a preferable design solution according to the present invention, the body uplifts in a direction perpendicular to the first plane in a way of being distal from the light source, wherein, the outer surface of the body is the emergent face of the lens. The lens according to the present invention has features of a convex lens, thus it can be ensured that the light from the light source can be emitted to an object to be lighted widely and evenly.

In a preferable design solution according to the present invention, the outer surface is a freeform curved face. Users can select a suitable freeform curved face as the outer surface according to features such as the area of the object to be lighted or lighting intensity.

In a preferable design solution according to the present invention, the outer surface is rotationally symmetric about an optical axis perpendicular to the first plane. Thus an evenly symmetric light exiting face of the lens can be formed, which helps form even light spots at an object to be lighted.

In a preferable design solution according to the present invention, the contour of the outer surface is a freeform curve in the second plane perpendicular to the first plane, which is defined by the following equation:

$$y = -0.0001x^6 - 0.0029x^5 - 0.0251x^4 - 0.091x^3 - 0.1469x^2 - 0.0885x + 6.297 .$$

In addition, the present invention also relates to a lighting device comprising a light source and the above lens. This lighting device has a compact structure and the light source therein can be designed to be in various suitable sizes.

**Brief Description of the Drawings**

The accompanying drawings a part of the present Description and are used to provide further understanding of the present invention. Such accompanying drawings illustrate the embodiments of the present invention and are used to describe the principles of the present invention together with the Description. In the accompanying drawings the same components are represented by the same reference numbers. As shown in the drawings:

Fig. 1 is a three-dimensional bottom diagram of the first embodiment of the lens according to the present invention;

Fig. 2 is a sectional diagram of the first embodiment;

Figs. 3a-3c are sectional diagrams of the second, the third and the fourth embodiments of the lens according to the present invention;

Fig. 4 is a three-dimensional bottom diagram of the fifth embodiment of the lens according to the present invention;

Fig. 5 is a diagram of the light path of the lighting device according to the present invention; and

Figs. 6a-6c are diagrams of the optical effects of the three different embodiments of the lighting device shown in Fig. 5.

**Detailed Description of the Embodiments**

In the following detailed description, reference is made to the accompanying drawings, which form a part hereof, and in which is shown by way of illustration specific embodiments in which the invention may be practiced. In this regard, directional terminology, such as "top", "bottom", "upper", "lower", is used in reference to the orientation of the figures being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

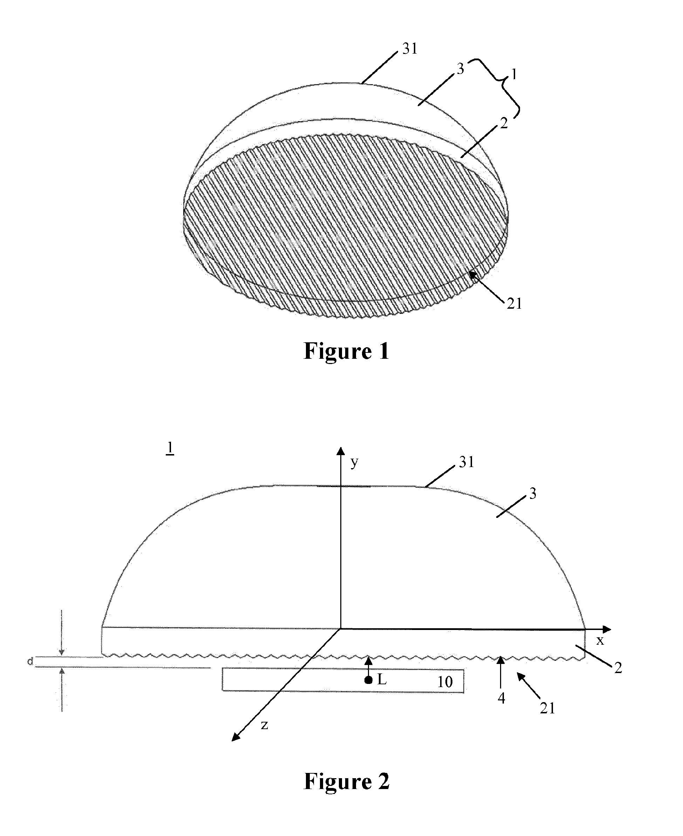

Fig. 1 is a three-dimensional bottom diagram of the first embodiment of the lens according to the present invention. The lens 1 according to the present invention comprises a base 2 and a body 3 extending out from the base 2 in the direction as shown in Fig. 1, and the body 3 uplifts in a direction distal from the light source (not shown in the drawing), wherein, the outer surface 31 of the body 3 is the emergent face of the lens 1.

According to the present invention, the base 2 is designed to be a flat panel, and is designed with an optical micro-structure at the side towards the light source, i.e., the bottom facing away the body 3, to form an incident face 21 for receiving the incident light from the light source. In the most preferable situation, the optical micro-structure is formed on the overall bottom 2. The advantages of the lens 1 according to the present invention lie in that, although the incident face 21 has an optical micro-structure, the incident face, more accurately the base 2 per se, still has a trend of extending along a plane. The lens 1 does not need to be designed with an accommodating cavity for accommodating the light source, and can advantageously receive the incident light optically only by way of the optical micro-structure, thus the lens 1 can be used in combination with light sources with different sizes and especially different areas. Based on such a design, the generality of the lens 1 is obviously improved and the thickness of the lens per se is reduced.

Fig. 2 is a sectional diagram of the first embodiment, and illustratively shows the light source 10 configured for the lens. Referring to the rectangular coordinate system in the drawing, it is seen that the base 2 is flat panel extending in the first plane xz. The axis y can be deemed as the optical axis of the lens 1. A plurality of evenly distributed grooves 4 are formed in the side of the base 2 towards the light source, and can be designed as long grooves extending in parallel to each other along the axis z, thus jointly form the optical micro-structure for receiving the incident light L from the light source 10 in a way of a first microstructure array. To keep the optical effect of the lens, preferably, the grooves 4 are designed as a V-shape groove. In this embodiment, the V-shape grooves have a symmetric design in the direction perpendicular to the first plane xz, thus the first microstructure array has a continuous sawthooth-shape contour in a second plane perpendicular to the first plane xz.

The outer surface 31 of the body 31 can be designed as a freeform curved face. In the preferable situations shown in Figs. 1 and 2, the lens 1 is designed as a rotational symmetric body, thus the outer surface 31 is also rotationally symmetric about the optical axis y. Seen within the second plane xy, the contour of the outer surface 31 is a freeform curve defined by the following equation:

$$y = -0.0001x^6 - 0.0029x^5 - 0.0251x^4 - 0.091x^3 - 0.1469x^2 - 0.0885x + 6.297 \;.$$

For example, in the situation that the thickness of the lens is 6.3mm, the radius of the lens can be 9mm.

In addition, as further seen from Fig. 2, the lens 1 and the light source 10 are arranged separately from each other, and there is a predetermined distance d between the incident face 21 and the light source 10. By adjusting the value of the distance d, i.e., the positions of the lens 1 and the light source 10, different optical effects can be obtained.

In an embodiment not shown herein, the first array lens can be formed using an arch-shape groove, a trapezium-shape groove or other forms of grooves.

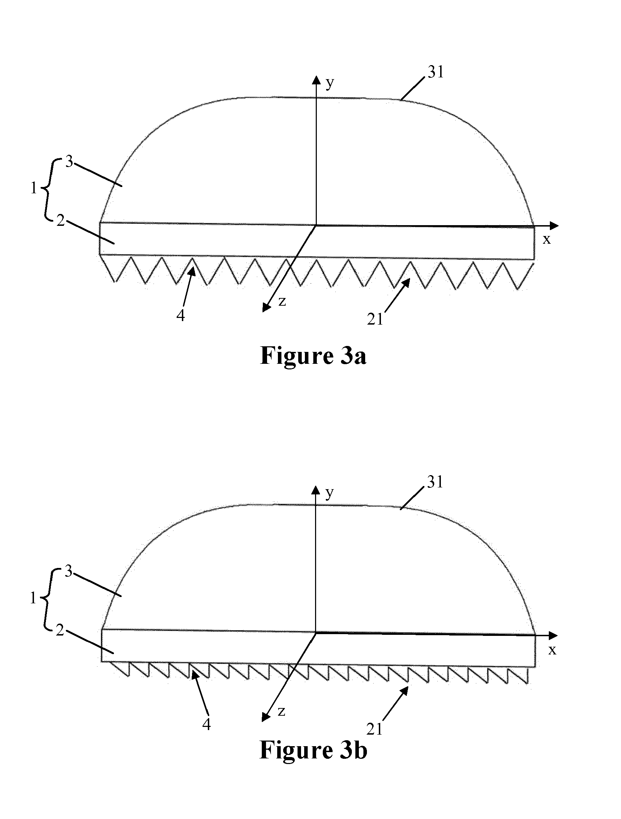

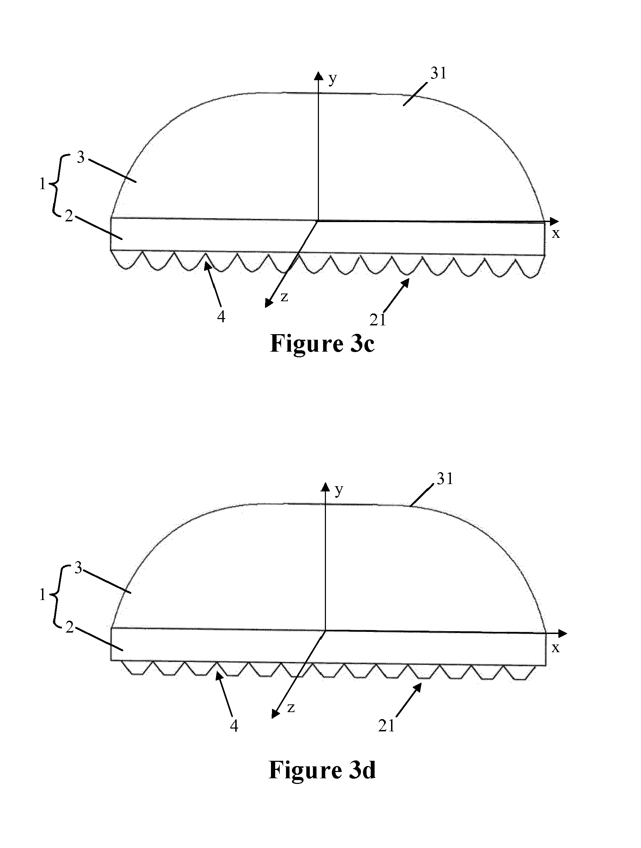

Figs. 3a-3c are sectional diagrams of the second, the third and the fourth embodiments of the lens according to the present invention. Being similar to the first embodiment shown in Fig. 2, in the second embodiment, the first microstructure array has a continuous asymmetric sawtooth-shape contour. In the third embodiment, the first micro-structure array has a continuous wave-shape contour. In the fourth embodiment, the first microstructure array has a continuous trapezium-shape contour. In addition, according to actual needs, the first microstructure array may also has a contour in the second plane defined by other forms of curves.

In an embodiment not shown herein, the first microstructure array may also have a discontinuous sawtooth-shape contour, a discontinuous wave-shape contour or a discontinuous trapezium-shape contour in the second plane.

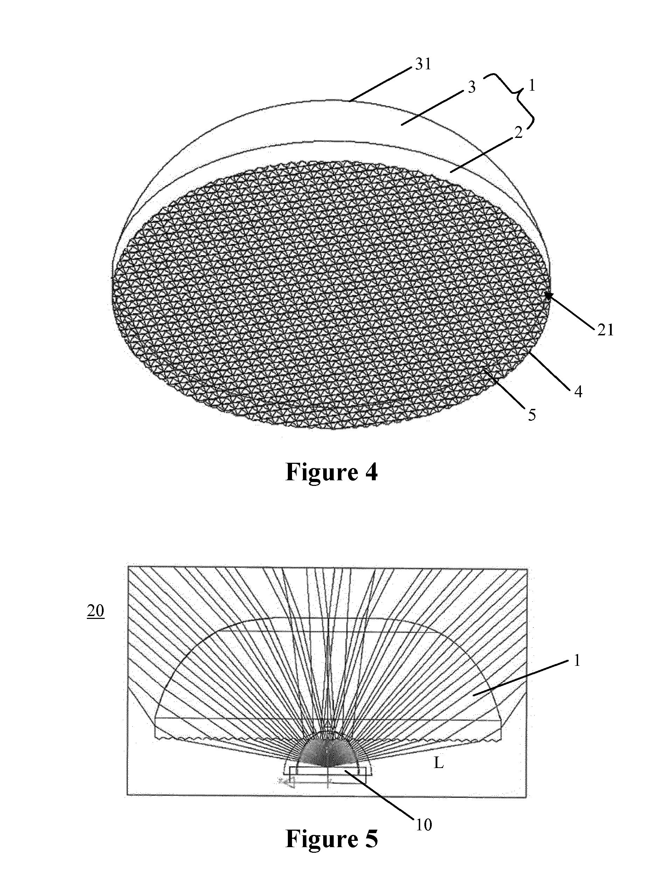

Fig. 4 is a three-dimensional bottom diagram of the fifth embodiment of the lens according to the present invention. A first groove group and a second groove group respectively comprising a plurality of grooves 4 extending in parallel to each other are arranged alternatively with each other and jointly define a plurality of conical body units 5 which form the second microstructure array. The conical face of the conical body unit 5 is formed by part of the sidewalls of four grooves 4, and among the four grooves 4, two belong to the first groove group and the other two belong to the second groove group.

The conical body unit 5 is preferably designed as a square cone which bottom is a regular polygon. Especially advantageously, the bottom is a square. In the situation of a square cone which bottom is a square, each conical face of the square cone corresponds to an angle range of 90 degrees, thus the manufacturing cost of the lens according to the present invention can also be reduced to the most extent while the incident light is received as well as possible.

Fig. 5 is a diagram of the light path of the lighting device according to the present invention. The light L from the light source 10 enters the lens 1 through the incident face 21 and is emitted out through the body 3. The light source 10 in this embodiment can be preferably designed as an LED chip made by way of a COB process. As the thickness of the lens 1 per se is small, and the distance between the lens 1 and the light source 10 is also small, under the precondition of ensuring a compact structure of the lighting device 20 according to the present invention, especially that the lens 1 and the light source 10 are arranged with same center ache, uniform efficient lighting effect can both be achieved.

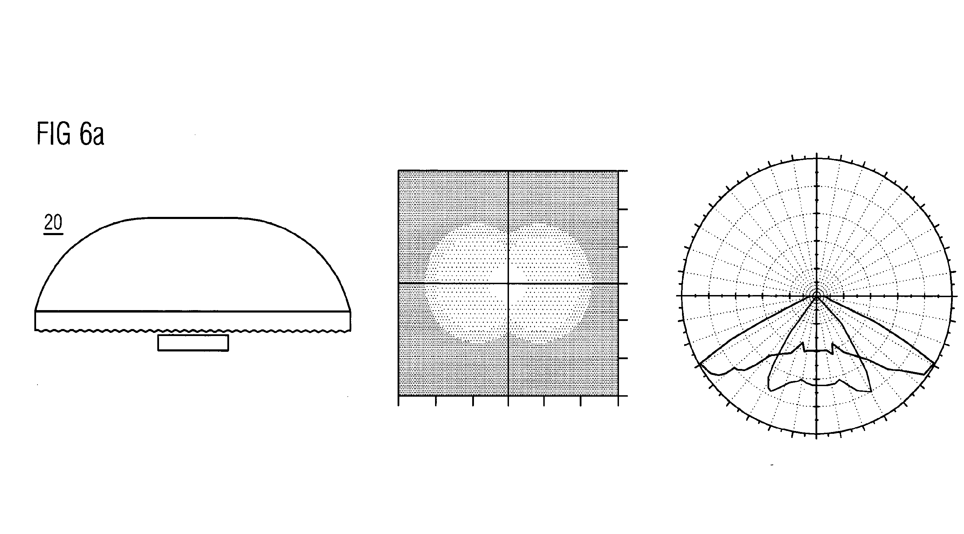

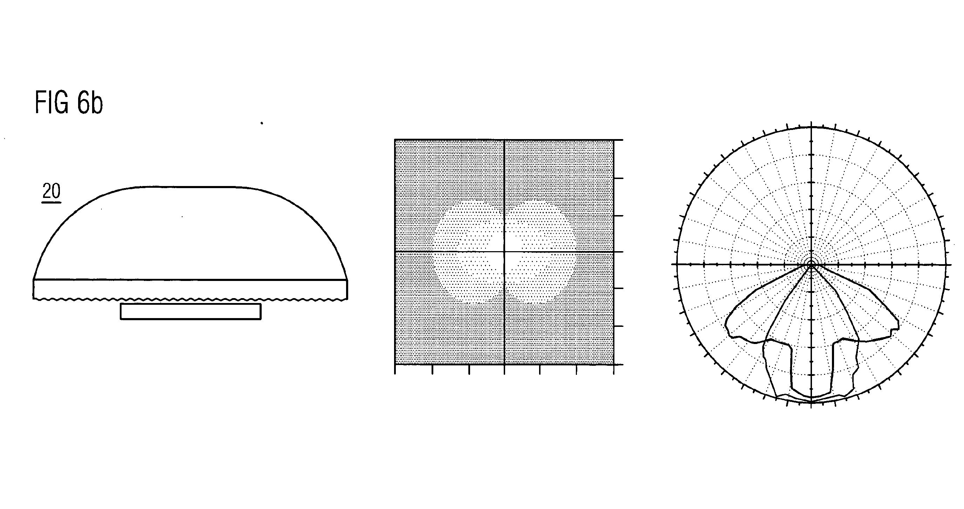

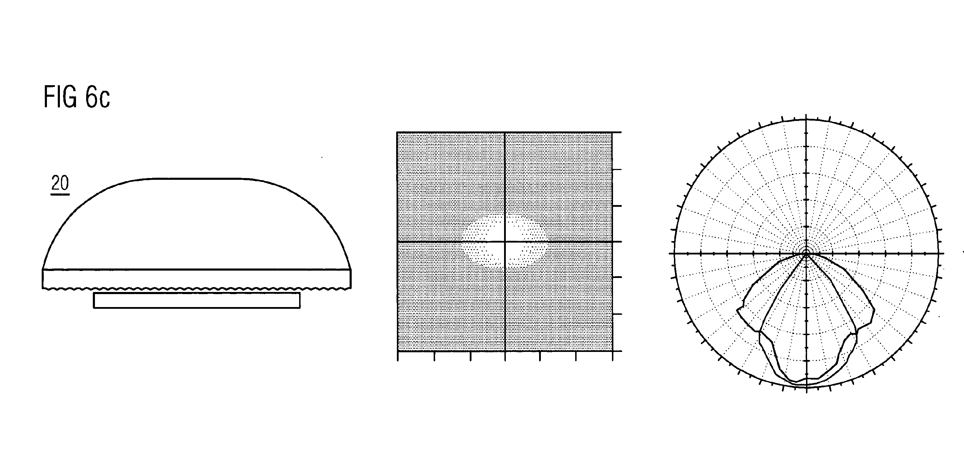

Figs. 6a-6c are diagrams of the optical effects of the three different embodiments of the lighting device shown in Fig. 5. As respectively seen from Figs. 6a-6c, the area of the incident face 21 of the lens 1 is larger than that of the light source 10, thus the lens 1 has high generality for different light sources 10. In addition, the light spots of the lighting device 20 can also be adjusted by changing the distance between the lens 1 and the light source 10.

The above is merely preferred embodiments of the present invention but not to limit the present invention. For the person skilled in the art, the present invention may have various alterations and changes. Any alterations, equivalent substitutions, improvements, within the spirit and principle of the present invention, should be covered in the protection scope of the present invention.

List of reference signs

1       lens

2       base

21      incident face

3       body

31      outer surface/emergent face of the body

4       groove

5       conical body unit

10      light source

20      lighting device

D       distance

L       light from the light source/incident light

Y       optical axis

Xz      first plane

Xy      second plane

**Claims**

1.  A lens (1) for a light source (10), comprising a base (2) and a body (3) extending from the base (2), **characterized in that**, an optical micro-structure is provided on the bottom of the base (2) facing away the body (3) to form an incident face (21), and a light (L) from the light source (10) enters into the incident face (21) and emitted from the body (3).

2.  The lens (1) according to claim 1, **characterized in that**, the base (2) is a flat panel extending in a first plane (xz).

3.  The lens (1) according to claim 2, **characterized in that**, the optical micro-structure is formed on the whole bottom.

4.  The lens (1) according to claim 2, **characterized in that**, a predetermined distance (d) is kept between the incident face (21) and the light source (10).

**5.** The lens (1) according to claim 2, **characterized in that**, the area of the incident face (21) is larger than that of the light source (10).

**6.** The lens (1) according to any of claims 1 to 5, **characterized in that**, the optical micro-structure is formed by a plurality of grooves (4).

**7.** The lens (1) according to claim 6, **characterized in that**, the plurality of grooves (4) are a plurality of long grooves extending in parallel to each other which form a first microstructure array.

**8.** The lens (1) according to claim 6, **characterized in that**, the plurality of grooves (4) are respectively designed as a V-shape groove.

**9.** The lens (1) according to claim 7, **characterized in that**, the first microstructure array has a continuous sawtooth-shape contour in a second plane (xy) perpendicular to the first plane (xz).

**10.** The lens (1) according to claim 7, **characterized in that**, the first microstructure array has a continuous wave-shape contour in a second plane (xy) perpendicular to the first plane (xz).

**11.** The lens (1) according to claim 7, **characterized in that**, the first microstructure array has a continuous trapezium-shape contour in a second plane (xy) perpendicular to the first plane (xz).

**12.** The lens (1) according to claim 6, **characterized in that**, the grooves (4) adjacent to each other form a conical body unit (5), wherein, the sidewalls of the respective grooves (4) form the conical face of the conical body unit (5), and a plurality of the conical body units (5) form a second microstructure array.

**13.** The lens (1) according to any of claims 1 to 5, **characterized in that**, the body (3) uplifts in a direction perpendicular to the first plane (xz) in a way of being distal from the light source (10), wherein, the outer surface (31) of the body (3) is the emergent face of the lens (1).

**14.** The lens (1) according to claim 13, **characterized in that**, the outer surface (31) is a freeform curved face.

**15.** The lens (1) according to claim 14, **characterized in that**, the outer surface (31) is rotationally symmetric about an optical axis (y) perpendicular to the first plane (xz).

**16.** The lens (1) according to claim 15, **characterized in that**, the contour of the outer surface (31) is a freeform curve in the second plane (xy) perpendicular to the first plane (xz), which is defined by the following equation:

$$y = -0.0001x^6 - 0.0029x^5 - 0.0251x^4 - 0.091x^3 - 0.1469x^2 - 0.0885x + 6.297$$

**17.** A lighting device (20) comprising a light source (10), **characterized by**, further comprising the lens (1) according to any of claims 1 to 16.

**18.** The lighting device (20) according to claim 17, **characterized in that**, the light source (10) is an LED chip made by way of a COB process.

**Figure 1**

**Figure 2**

**Figure 3a**

**Figure 3b**

**Figure 3c**

**Figure 3d**

**Figure 4**

**Figure 5**

FIG 6a

FIG 6b

FIG 6c

20

**Europäisches Patentamt**
**European Patent Office**
**Office européen des brevets**

# EUROPEAN SEARCH REPORT

Application Number

EP 14 15 3393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 287 640 A2 (LG INNOTEK CO LTD [KR]) 23 February 2011 (2011-02-23) * figures 1-6,18,21,22,36 * * paragraph [0068] * | 1-18 | INV. F21V5/00 F21V5/04 G02B19/00 |
| X | JP 2009 146762 A (STANLEY ELECTRIC CO LTD) 2 July 2009 (2009-07-02) * paragraph [0007] - paragraph [0011]; figures 1,2 * | 1-18 | |
| X | WO 2012/033180 A1 (MITSUBISHI CHEM CORP [JP]; ONAKA SHUUJI; KASAKURA AKEO; TAKEDA TORU) 15 March 2012 (2012-03-15) * figures 1-3,6-7,17-18 * & EP 2 615 652 A1 (MITSUBISHI CHEM CORP [JP]) 17 July 2013 (2013-07-17) * paragraph [0012] - paragraph [0015] * | 1-18 | |

TECHNICAL FIELDS SEARCHED (IPC)

G02B
F21V
F21K
B29D

The present search report has been drawn up for all claims

| Place of search | Date of completion of the search | Examiner |
|---|---|---|
| Munich | 4 June 2014 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                

& : member of the same patent family, corresponding document

EPO FORM 1503 03.82 (P04C01)

**EP 2 778 515 A1**

### ANNEX TO THE EUROPEAN SEARCH REPORT
### ON EUROPEAN PATENT APPLICATION NO.

EP 14 15 3393

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2014

| Patent document cited in search report | | Publication date | Patent family member(s) | | Publication date |
|---|---|---|---|---|---|
| EP 2287640 | A2 | 23-02-2011 | CN | 101929651 A | 29-12-2010 |
| | | | EP | 2287640 A2 | 23-02-2011 |
| | | | EP | 2672299 A1 | 11-12-2013 |
| | | | JP | 2010272527 A | 02-12-2010 |
| JP 2009146762 | A | 02-07-2009 | JP | 5150235 B2 | 20-02-2013 |
| | | | JP | 2009146762 A | 02-07-2009 |
| WO 2012033180 | A1 | 15-03-2012 | CN | 103081144 A | 01-05-2013 |
| | | | EP | 2615652 A1 | 17-07-2013 |
| | | | JP | 2012109532 A | 07-06-2012 |
| | | | US | 2013194795 A1 | 01-08-2013 |
| | | | WO | 2012033180 A1 | 15-03-2012 |

EPO FORM P0459

For more details about this annex : see Official Journal of the European Patent Office, No. 12/82